# EUROPEAN PATENT APPLICATION

(11) **EP 1 480 010 A1**
(43) Date of publication of application: **24.11.2004**
(21) Application number: 04251449.7
(22) Date of filing: 12.03.2004
(51) Int. Cl.: G01C 9/26

(54) **Spirit level with slidable extension covers**

(30) Priority: 19.05.2003 GB 0311445
(71) Applicant: G2 Design Consultants Limited, Chesham HP5 2AF (GB)
(72) Inventor: Glover, Andrew Paul c/o G2 Design Consultants Ltd, Higham Road Chesham HP5 2AF (GB)
(74) Representative: Evens, Paul Jonathan

(57) **Abstract**

A spirit level comprises an elongate, central member 72 and a pair of covers 64 which are slidably mounted on the central member 72. The covers 64 are slidable from a fully extended configuration (as shown) to a closed configuration where each cover 64 encloses up to one half of the elongate member 72. Three axially spaced vials 18, 20 for checking different alignments are mounted in apertures in the central member 72. Two of the vials 18 are visible through windows 20 in the covers 64 when in the closed configuration. The two vials are also visible when the covers 64 are in the fully extended configuration.

## Description

### TECHNICAL FIELD

This invention relates to a spirit level, preferably a spirit level having multiple vials for checking different alignments.

The present invention provides a spirit level comprising an elongate or central member comprising at least two vials for checking different alignments and two covers which are independently slidably mounted on the elongate member and which each comprise at least one window for viewing a respective vial therethrough when registered therewith, with each cover being slidable from a first position enclosing up to one half of the elongate member to a second position extending a substantial part of its length from a respective end of the elongate member.

The spirit level is thus compact for ease of carrying or storage when the covers are in their first positions. When the covers are in their first positions, the vials may not be aligned with the windows whereby the covers provide protection for the vials. Alternatively, the vials may be visible when the covers are in their first positions. Such a spirit level may be compact and thus useful where there is restricted working space.

The covers may be slidable to an intermediate position between the first and second positions. The vials may be visible through the windows in the intermediate positions. Extending the spirit level to the second or intermediate position may increase the ease of handling the spirit level or may alter the length of the spirit level to fit the working space.

Linear guide means may be provided on the covers and the central member whereby the covers are slidable in rectilinear fashion along the central member. The guide means may comprise at least one rail part which is received in a corresponding groove part. The rail part may project from a front surface of the central member and the groove part may be provided on the inside surface of the cover(s). Alternatively, the rail part may be provided on the cover(s) and the groove part on the central member. The covers may comprise gripping means, *e.g.* ribs, fingerholds or the like, to assist a user in sliding the covers along the central member.

The spirit level may comprise a resilient bias to ensure good operation of the guide means, *i.e.* to keep the rails in contact with the grooves. The spirit level may comprise at least one tubular housing in which a bearing (*e.g.* ball) is resiliently supported on a spring whereby the bearing may move freely in an axial direction within the tubular housing. The bearing protrudes from one end of the tubular housing although the amount it protrudes can be reduced by compression of the spring. In this way, the bearing is able to ride over any surface imperfections, whilst maintaining a pressure between a cover and the central member. Each half of the spirit level may comprise three tubular housings which are arranged at the vertices of an isosceles triangle. At least one bearing may be configured to run in a channel which has projections to stop the covers at the second and/or intermediate positions, *i.e.* so that the bearing acts as a detent.

Alternatively, the resilient bias urging the at least one rail part into the corresponding groove part may comprise a cantilevered member, for example formed in one cover. The cantilevered member may have a profile configured to engage a corresponding profile (for example, in the elongate member) to retain the cover in at least one predetermined position relative to the elongate member. The predetermined positions may correspond to the closed end extended configurations of the spirit level. The cantilevered member may be formed of plastics material and be integrally formed (*e.g.* moulded) in for example the cover.

The central member may be beam-like. The central member may be plastics and may be moulded, *e.g.* injection moulded. The covers may be elongate box-section structures which may be formed from two releasably attachable pieces (for example, a base part and a lid part). The covers may be formed from metal, *e.g.* aluminium, plastics or nylon.

Each cover may comprise at least one window in both its rear and front faces. The windows in each face may be in registration, and may be registrable with an aperture in which one of the vials is mounted. Each cover may comprise two windows in each face. Alternatively, each face of each cover may comprise one window and one cutaway section at one end, whereby in the first position the two cutaway sections form a third window. The windows may be elliptical or circular.

The at least two vials preferably measure different alignments, e.g. horizontal, vertical and/or diagonal. The central member may comprise three vials, at least two of which measure different alignments. A first vial may be centrally mounted on the central member and a pair of vials may be mounted one at each opposed end of the central member.

### BRIEF DESCRIPTION OF THE DRAWINGS

The invention is diagrammatically illustrated, by way of example, in the accompanying drawings, in which:-
Figures 1 to 3 are front perspective view of a spirit level according to a first aspect of the invention in its first, second and third configurations respectively;
Figure 4 is a rear exploded perspective view of the spirit level of Figure 1;
Figure 5 is a rear view of the spirit level of Figure 1;
Figure 6a is a view of the inside face of the front piece of a cover used on the spirit level of Figure 1;
Figure 6b is a side view of the rear piece of the cover of Figure 6a;
Figures 7a and 7b are rear and side views of the central member of the spirit level of Figure 1, respectively;
Figure 8 is a cross-sectional view along part of line CC of Figure 5.
Figure 9 is a rear view of a section of the spirit level of Figure 1 with the rear piece of the cover removed;
Figure 10 is a cross-section along line DD of Figure 5;
Figures 11 and 12 are front perspective views of a spirit level according to a second aspect of the invention in its first and second configurations respectively;
Figure 13a and 13c are front and rear views of the spirit level of Figure 11;
Figure 13b is a cross-sectional view along line DD of Figure 13a;
Figures 14a and 14b are cross-sectional views along lines EE and FF of Figure 13c;
Figure 15 is a view of the inside face of the rear piece of the cover used on the spirit level of Figure 11.
Figure 16a is a view of the inside face of the front piece of a cover used on the spirit level of Figure 11;
Figure 16b is an end view of the front piece of the cover of Figure 16a;
Figures 17a, 17b and 17c are front, rear and side views of the central member of the spirit level of Figure 11, respectively, and
Figure 18 shows schematically detail of an alternative embodiment to the spirit level of Figures 11 and 12.

### DETAILED DESCRIPTION OF THE DRAWINGS

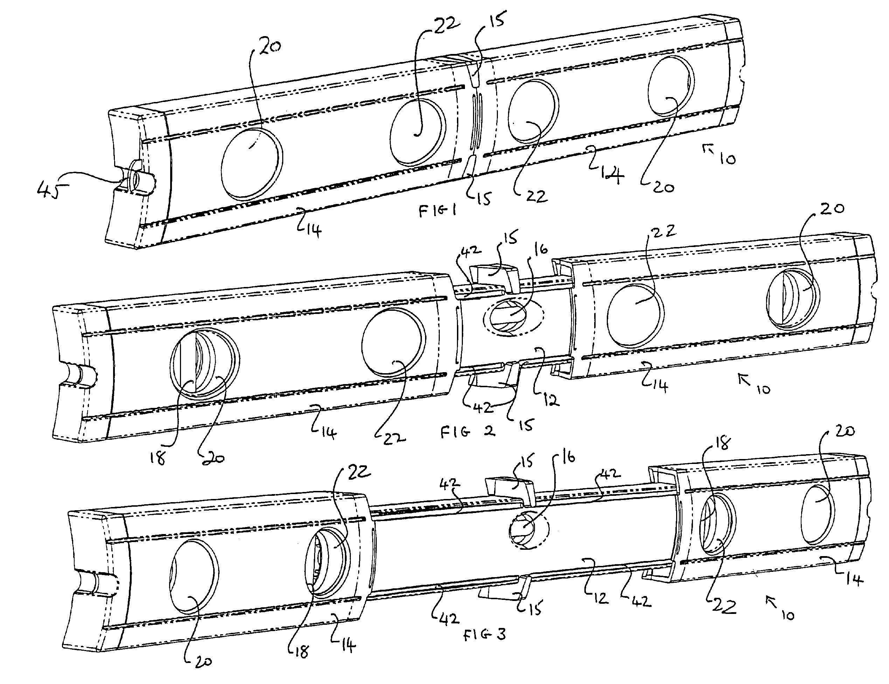

Figures 1 to 10 show a spirit level 10 according to a first aspect of the present invention. The spirit level 10 comprises a beam-like central member 12 and two covers 14 which are independently slidably mounted along the central member 12. The covers 14 may be slid from a first position as shown in Figure 1 in which each cover encloses one half of the central member 12 to another position shown in Figure 3 in which the covers 14 extend from opposite ends of the central member 12.

Three vials are mounted in the central member 12. A first vial 16 is centrally mounted and is parallel to the long axis of the central member 12. The other two vials 18 are mounted towards opposed ends of the central member 12 and are both perpendicular to the first vial 16. As with conventional spirit levels, the vials contain bubbles to check horizontal or vertical alignment. The covers are each provided with two elliptical windows or holes 20,22 in their front faces.

Figure 1 shows the spirit level 10 in its closed or first configuration with the central member 12 housed completely within the covers 14. The holes 20 are not aligned with the vials so that none of them is exposed. In this configuration, the spirit level is compact for ease of carrying or storage and the covers provide protection for the vials 16, 18.

Figure 2 shows the spirit level 10 in an intermediate or partially extended configuration. The covers 14 have been pulled apart slightly from each other to reveal the central vial 16. The other two vials 18 are also visible through the holes 20 closest to the opposed ends of the spirit level. Figure 3 shows the spirit level 10 in a fully extended configuration. The covers 14 have been pulled fully apart (*i.e.* further apart than in Figure 2) so that the pair of vials 18 are visible through the other set of holes 22.

In the first configuration each cover 14 abuts a pair of projections 15 extending from the top and bottom of the central member 12. The projections 15 act as "stops" which prevent the central member 12 from being pushed beyond a set amount into each cover 14. The projections 15 also extend from the rear of the central member 12. The projections 15 are level with the covers 14, at least to the top, bottom and rear surface of the central member 12. In the intermediate or fully extended configurations, the stops 15 and the covers fit flush against a planar surface when the top, bottom or rear surface of the spirit level is placed thereagainst.

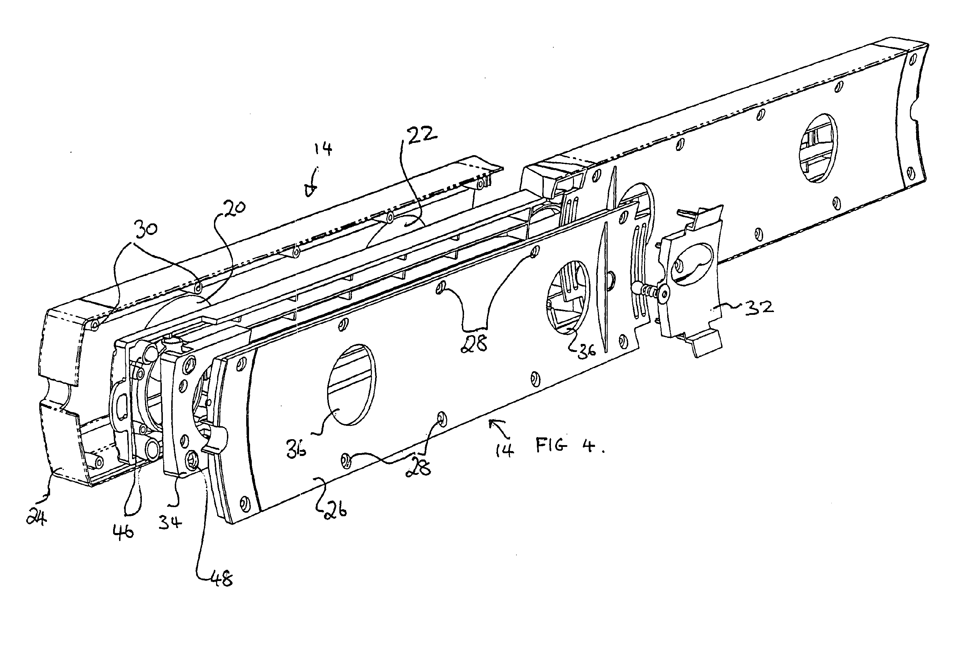

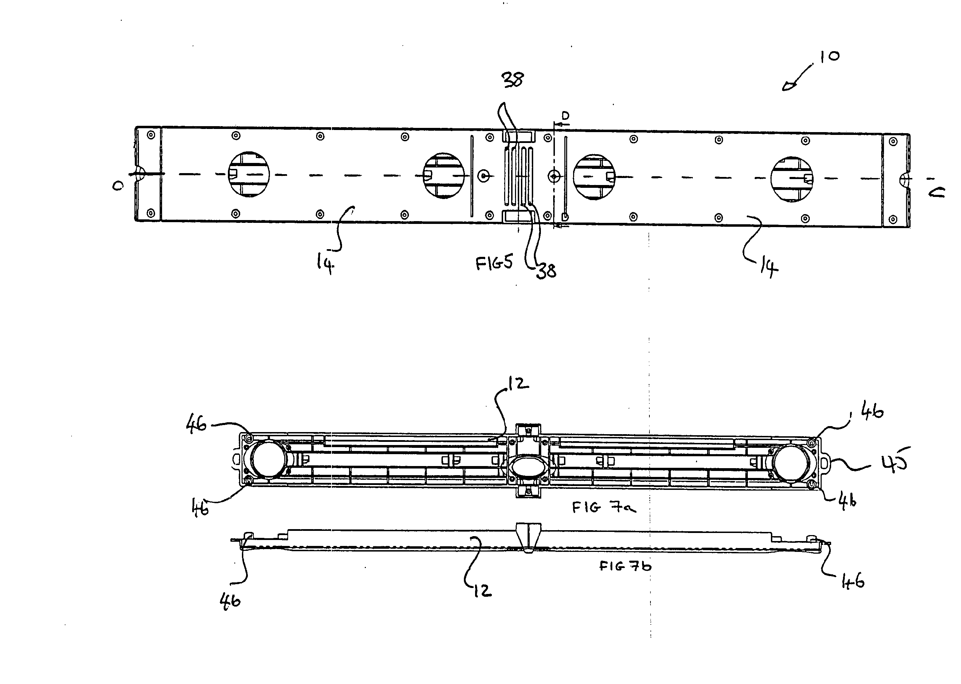

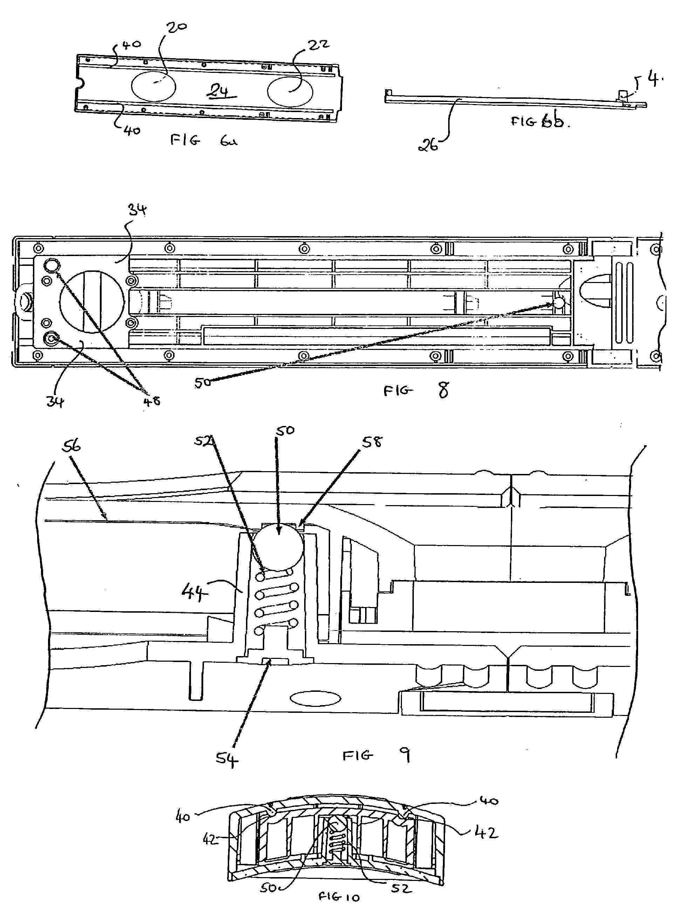

Figure 4 is an exploded view showing the various components which together comprise the spirit level of Figures 1 to 3. Each cover 14 is formed from a front piece 24 having a generally U-shaped cross-section and a generally arcuate planar rear piece 26. The two pieces are secured together by screws (not shown) which pass through holes 28 in the rear piece into bores 30 in the front piece 24 to form an elongate box-section structure. The rear piece 26 of each cover comprises a pair of circular holes 36 which are aligned with the elliptical holes 20,22 in the front piece 24.

The central member 12 comprises a first vial cover 32 which is mounted centrally on the member to support the first vial 16 and which is covered by the two adjacent ends of the covers 14 when the spirit level is in its closed configuration. The central member 12 also comprises two other vial covers 34 at opposed ends thereof and supporting the vials 18.

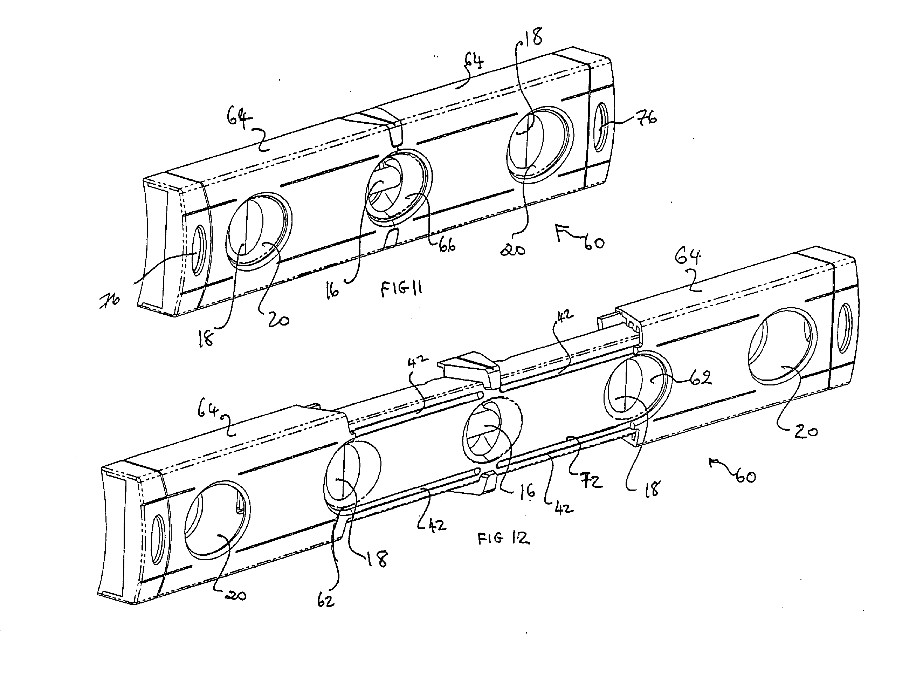

Figure 5 is a rear view of the assembled closed spirit level 10. A pair of ribs 38 is provided on the rear piece of each cover 14 towards the centre of the spirit level to provide improved purchase, assisting a user to pull the covers apart. As shown in Figure 1, a rib is also provided on the front piece of each cover 14 for the same purpose.

Figure 6a shows the inside surface of the front piece 24 of each cover which have the elliptical holes 20,22. A parallel pair of rails 40 is provided above and below the holes with the rails 40 running along the length of the inside surface. The rails 40 are received in corresponding grooves 42 on the front face of the central member (see Figures 2 and 3) to provide guide means whereby the covers 14 are slidable in rectilinear fashion along the central member 12. Alternatively, the rails may be provided on the front face of the central member and corresponding grooves on the covers.

Figures 6b to 10 illustrate a ball and spring mechanism which may be used to maintain contact between the rails and grooves. Figure 6b shows a first tubular housing 44 which projects from the inside surface of the rear piece 26 of each cover and in which a ball supported on a spring is housed. The first tubular housing 44 is mounted along the central axis of the rear piece 26 towards the end with the ribs.

Figures 7a and 7b show two further pairs of tubular housings 46 projecting outwardly from the rear face of the central member 14. The four tubular housings 46 are mounted towards the four corners of the central member and each houses a ball supported on a spring. As shown in Figure 4, each pair of tubular housings 46 is aligned with holes 48 in the vial covers 34 at opposed ends of the central member.

Figures 7a and 7b also show that the central member 12 is formed with a pair of loops 45, one at each opposed end of the member 12. As shown in Figure 1, these loops project from the covers 14 in the closed position to provide means for hanging the spirit level.

As shown in Figure 8, the three tubular housings 44,46 in each half of the spirit level are aligned on the vertices of a triangle. The position of the ball 50 of the first tubular housing is aligned with the apex of an isosceles triangle whose base is defined by the holes 48 in the vial cover 34.

Figures 9 and 10 show that the ball and spring mechanism housed within the first tubular housing 44. A similar mechanism is used in the other housings. A ball 50 is supported on and resiliently biased by a spring 52 and the mechanism is secured in the tubular housing 44 by a cap 54. Part of the ball 50 is able to protrude from the protuberant end of the housing 44, but the ball 50 is prevented from leaving the housing 44 altogether. The ball 50 runs in a channel 56 which has projections 58 which stop the covers at the partially and fully extended positions respectively. The spring 52 allows the ball 50 to move freely in an axial direction within the tubular housing so that as the ball moves along the channel any surface imperfections may be absorbed, whilst maintaining a continuous pressure between the covers and the central member.

The rails 40 and grooves 42 which provide the guide means for sliding the covers along the central member are also clearly shown in Figure 10.

Figures 11 to 17c show a spirit level 60 which is generally similar to that shown in the previous embodiment. The spirit level may be smaller than the previous embodiment and may expand by about two-thirds from say 30cm to say 50cm. Features in common have the same reference numbers.

The spirit level 60 comprises a central member 72 and two covers 64 which are slidably mounted on the central member 72. As in the previous embodiment, three vials 16,18 are mounted in apertures in the central member 72. Each cover 64 has one elliptical window or hole 20 in its front face and a truncated elliptical window which is cut away at one end so that when the covers 64 are adjacent the cutaway sections 62 form a third elliptical window or hole 66.

Figure 11 shows the spirit level 60 in its closed or first configuration with the central member 72 housed completely within the covers 64. Figure 12 shows the spirit level 60 in its second or fully extended configuration. In both configurations the vials are fully visible.

In Figure 11, the central vial 16 is visible through the elliptical hole 66 formed from the two cutaway sections. The other vials 18 are visible through the elliptical holes 20 in each cover. In Figure 12, the covers 64 have been pulled apart to reveal the central vial 16 and the other vials 18 are visible through the semi-elliptical cutaway sections 62.

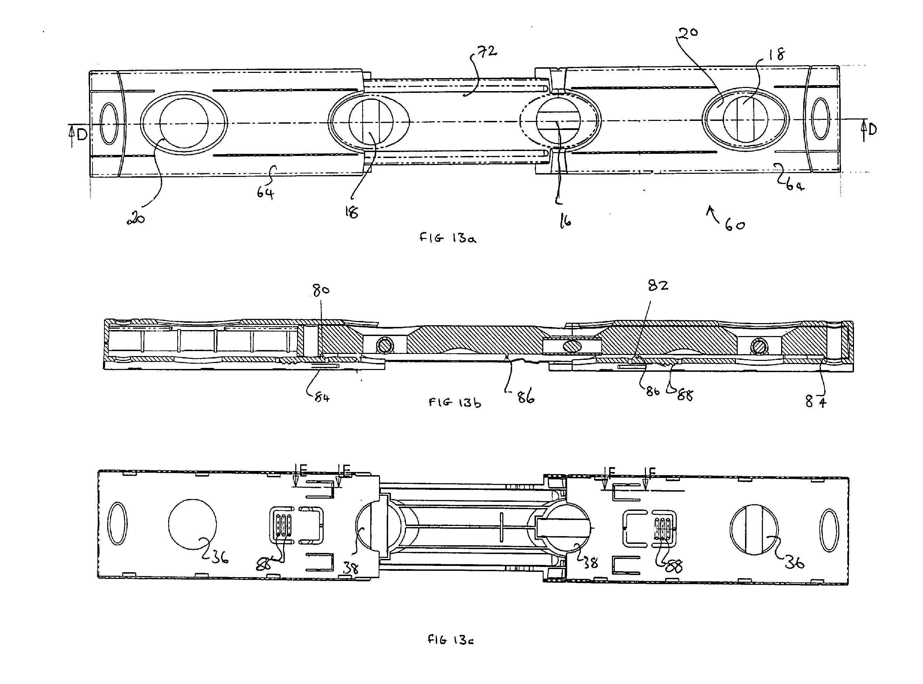

Figures 13a to 13c show the spirit level with only one cover (the left-hand cover in the drawings) in the extended position. The rear face of each cover is provided with a circular hole 36 and a circular cutaway section 38 aligned with the elliptical holes and cutaway sections in the front face respectively.

As shown in Figure 13b, each cover 64 is provided with a projection 80 which is adjacent the cutaway section 38. A first pair of projections 84 are located at opposed ends of the central member 72 and a second pair of projections 86 is located either side of the central vial 16. In the extended position, the cover projection 80 engages with one of the first pair of projections 84 to prevent each cover becoming separated from the central member. In the closed position, the cover projection 80 engages with one of the second pair of projections 86 to maintain the cover in the closed position.

The covers may be moved to the extended position by pressing against rails 88 so as to flex the cover 64 and disengage the cover projections 80 from the second pair of projections 86. The rails 88 thus act as a release button. The rails also provide grip so that the covers 64 may be moved along the central member 72.

As shown in Figures 14a and 14b, a pair of plastics springs 84 are built into each cover 64 to provide a good contact between the covers 64 and the central member. Each spring 84 is formed as a cantilevered strip in its cover 64 and has an inwardly projecting rounded profile 85 at its free end 87. In use, the rounded profile bears against the central member 72, with a positive bias being provided by resilience of the strip as the rounded profile is urged away from its rest position through engagement with the central member 72 when the cover 64 is in the closed position, the rounded profile 85 registers with and nestles in a recess or indentation 88 in the central member 72, preventing the cover 64 from freely sliding over the central member 72 towards the extended configuration.

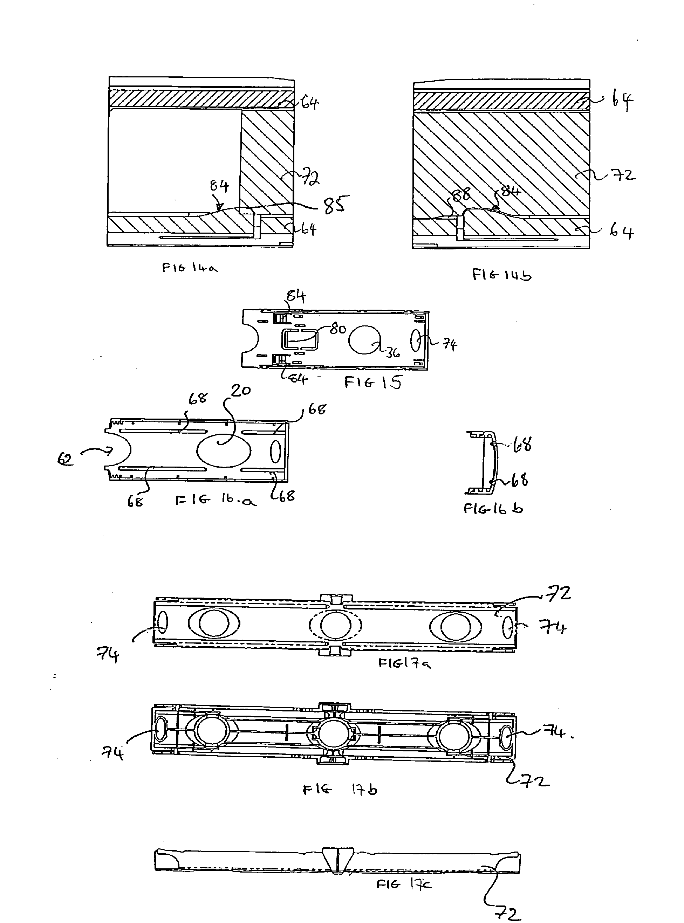

Figure 15 shows the detail of the inside face of the rear piece of each cover 64. The pair of springs 84 are located either side of the projection 80.

Figures 16a and 16b show the inside surfaces of the front piece of each cover which have the elliptical hole 20 and semi-elliptical cutaway section 62. A parallel pair of discontinuous rails 68 is provided above and below the hole. The rails 68 are aligned with grooves 42 on the front face of the central member (see Figure 12) to provide guide means for sliding the covers 64 along the central member 72. The discontinuity in the rails 68 acts as a stop to prevent the covers 64 sliding past the fully extended position. As in the previous embodiment, the rails and grooves may be interchanged.

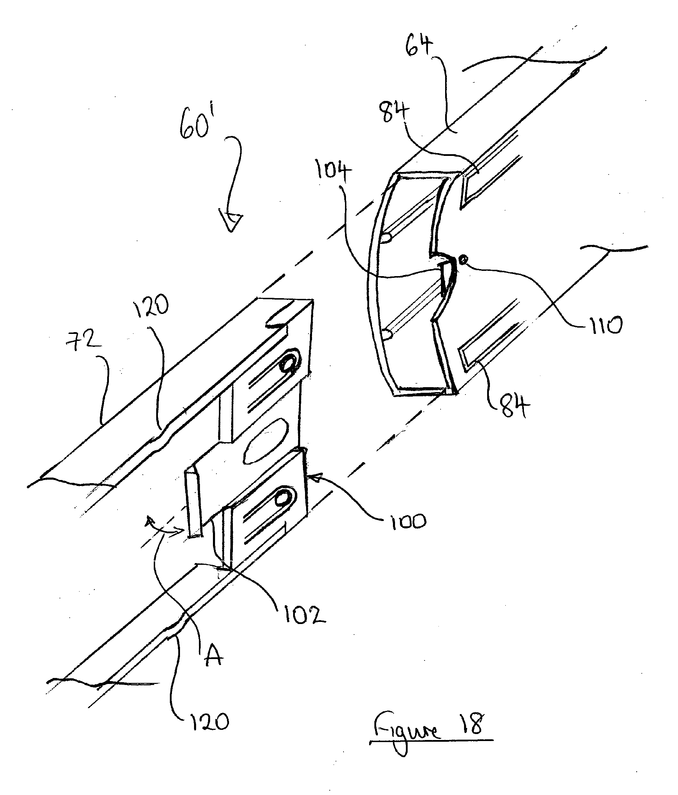

Figures 17a to 17c show the detail of the central member 72. A pair of holes 74 is provided one at each opposed end of the central member 72. As shown in Figure 11, these align with corresponding holes 76 in the covers 64 to provide means for hanging the spirit level on a hook or the like.

Figure 18 shows detail of a spirit level 60' which differs to the arrangement shown in Figures 11 and 12. Features in common between spirit levels 60 and 60' share the same reference number for ease of understanding. In spirit level 60', one end of the central member 72 accommodates an insert 100 defining a cantilevered lug 102. The lug 102 is resiliently flexible in the direction of arrow A and is configured to engage tab 104 mounted on the inside of cover 64 when the central member 72 is introduced therein. The lug 102 and tab 104 have profiles which are configured so that one rides over the other causing flexure of the lug 102 as the central member 72 is pushed inside the cover 64. Once past the tab 104, the lug 102 springs back to its "rest" position and together with tab 104 provides a stop mechanism preventing the cover 64 from sliding freely off the central member 72. However, the cover 64 may need to be removed from the central member 72, for example to allow cleaning of the rail 68. When fully extended, this can be accomplished by first inserting a pin (not shown) through pin hole 110 to urge the lug 102 to flex so that its profile is moved out of the path of the tab 104. Thereafter, the cover 64 may be pulled clear of the central member 72.

Figure 18 also shows a pair of nodules 120 on the central member 72 which are configured to engage respectively the inwardly projecting profiles 85 of the springs 84 as the spirit level 60' is fully extended. In use, engagement between the nodules 120 and springs 84 provide limited resistance to prevent the cover 64 sliding freely from its fully extended position towards its closed position. The limited resistance is of course easily overcome by applying sufficient force when the time comes to move the covers to their closed position.

## Claims

1. A spirit level comprising:
an elongate member comprising at least two vials for checking different alignments; and
two covers which are independently slidably mounted on the elongate member and which each comprise at least one window for viewing a respective vial therethrough when registered therewith, with each cover being slidable from a first position enclosing up to one half of the elongate member to a second position extending a substantial part of its length from a respective end of the elongate member.

2. A spirit level according to claim 1, in which the at least one window in each cover is configured to register with its respective vial when the cover is in the first position.

3. A spirit level according to claim 1 or claim 2, in which each of the vials is visible when the covers are in their second positions.

4. A spirit level according to any one of the preceding claims, further comprising linear guide means for guiding sliding movement of each cover relative to the elongate member.

5. A spirit level according to claim 4, in which the linear guide means comprises at least one guide rail part and a corresponding groove part, with one part being provided on the elongate member and the other part being provided on one cover.

6. A spirit level according to claim 5, further comprising a resilient bias for urging the at least one guide rail part into the corresponding groove part.

7. A spirit level according to claim 6, in which the resilient bias comprises a cantilevered member.

8. A spirit level according to claim 6, in which the cantilevered member has a profile configured to engage a corresponding profile to retain the cover in a predetermined position relative to the elongate member.

9. A spirit level according to any one of the preceding claims, further comprising a stop mechanism for preventing at least one cover from freely sliding off the elongate member, with at least part of the stop mechanism being accessible and controllable through the cover to allow removal of the cover from the elongate member when required
